# EUROPEAN PATENT SPECIFICATION

(11) **EP 4 584 499 B1**
(45) Date of publication and mention of the grant of the patent: **28.10.2026**
(21) Application number: 22785916.2
(22) Date of filing: 06.09.2022
(51) Int. Cl.: F04B 39/00, F04B 49/06, F04B 49/20, F04B 35/04

(54) **METHOD AND SYSTEM FOR CONTROLLING THE VIBRATION OF A VARIABLE CAPACITY COMPRESSOR OF A REFRIGERATION SYSTEM**
VERFAHREN UND SYSTEM ZUR STEUERUNG DER VIBRATION EINES VERDICHTERS MIT VARIABLER KAPAZITÄT EINER KÄLTEANLAGE
PROCÉDÉ ET SYSTÈME POUR COMMANDER LA VIBRATION D'UN COMPRESSEUR À CAPACITÉ VARIABLE D'UN SYSTÈME DE RÉFRIGÉRATION

(43) Date of publication of application: 16.07.2025
(73) Proprietor: NIDEC GLOBAL APPLIANCE BRASIL LTDA., 89219-100 Joinville - SC (BR)
(72) Inventor: ANDRICH, Roberto, 89219-100 JOINVILLE - SANTA CATARINA (BR); KNIES, Marcelo, 89219-100 JOINVILLE - SANTA CATARINA (BR); MAASS, Günter Johann, 89219-100 JOINVILLE - SANTA CATARINA (BR); PELLEGRINI, Cláudio de, 89219-100 JOINVILLE - SANTA CATARINA (BR); MIGUEL, Edson Corrêa, 89219-100 JOINVILLE - SANTA CATARINA (BR)
(74) Representative: Modiano, Gabriella Diana
(86) International application number: PCT/BR2022/050357
(87) International publication number: WO 2024/050610

(56) References cited:
- EP-B1- 3 535 533
- JP-A- H11 287 497
- US-A- 5 203 178
- US-A1- 2015 051 742

## Description

### Technical Field

The present invention discloses a method and system for controlling the vibration of a variable capacity compressor of a refrigeration system.

More specifically, the present invention solution aims to minimize, in an active way and with the employment of at least one vibration sensor, the vibration and noise of refrigeration systems equipped with variable capacity compressors.

### Background Art

Today most of the solutions to minimize vibration and noise in refrigeration systems equipped with variable capacity compressors are based on a priori search of the most problematic compressor operation conditions (where such conditions are mostly defined by the speed of the motor of the compressor), and then on creating prohibitive ranges of operation conditions by defining forbidden RPM ranges, being these prohibitive ranges permanent for all the products of a determined model.

Document US 5 203 178 A, entitled "NOISE CONTROL OF AIR CONDITIONER", published on April 20, 1993, discloses an air conditioning apparatus having a condenser fan, an evaporator fan, a compressor, at least two motors for driving the fans and the compressor, and being responsive to vibration of the apparatus to control the speed of each motor to reduce vibration. The apparatus performs a test to determine optimum speeds of the motors to minimize the vibration. The apparatus uses a microcomputer, operative during the test to change the speed of at least one of the motors to each of a plurality of different speed values within a predetermined speed range, and at least one vibration detector. The detector detects values of the vibration when the motors are operating at the different speed values. At the end of the test, the motors are controlled to operate at the speed value at which the vibration is minimiezed.

Document US2020240689A1, entitled: "METHOD AND APPARATUS FOR PREVENTIN COMPONENT MALFUNCTION USING ACCELEROMETERS", published on June 30, 2020, discloses a method of minimizing components of a heating, ventilation, and air conditioning (HVAC) system from malfunctioning, the method includes measuring, by an accelerometer associated with at least one component of the HVAC system, vibration of the at least one component and receiving, by a controller, actual vibration data reflective of the measured vibration. The method further includes determining, using the controller, whether the actual vibration data is greater than pre-defined acceptable baseline vibration data by more than a pre-defined acceptable amount and responsive to a positive determination in the determining step, adding, by the controller, as a deadband frequency, an operational frequency of the at least one component corresponding to the actual vibration data.

Document US2018202679A1, entitled: "METHOD AND APPARATUS FOR SYSTEM DIAGNOSTICS USING ACCELEROMETERS", published on July 19, 2018, discloses a method of monitoring component health of a heating, ventilation, and air conditioning (HVAC) system. The method includes measuring, by an accelerometer associated with at least one component of the HVAC system, of vibration of the at least one component, receiving, by a controller, actual vibration data reflective of the measured vibration, determining, using the controller, whether the actual vibration data differs from pre-defined acceptable baseline vibration data by more than an acceptable amount, and responsive to a positive determination in the determining step, forwarding, by the controller, information regarding the determination to a monitoring device to monitor operation of the component.

Document US2015300684A1, entitled: "SOUND LEVEL CONTROL IN A HVAC SYSTEM", published on October 22, 2015, discloses a system and method for controlling a sound level in a heating, ventilation, and air conditioning (HVAC) system are disclosed. The system includes a refrigeration unit including a compressor, a condenser fan, a controller, and a sound controller. The sound controller is configured to maintain a sound level of the refrigeration unit within a sound level operating range. A method of controlling a refrigeration unit for a heating, ventilation, and air conditioning (HVAC) system is described. The method includes determining, by a controller, a cooling requirement of a conditioned space. The controller also determines a sound level operating range for the refrigeration unit. The method further includes the controller applying a cooling setting based on the cooling requirement and the sound level operating range.

Document US2009093911A1, entitled: "VIBRATION PROTECTION IN A VARIABLE SPEED COMPRESSOR, published on April 9, 2009, discloses a vibration protection in a compressor system with a variable speed compressor may include operating a variable speed compressor at a plurality of frequencies, measuring a plurality of vibration values associated with the plurality of frequencies, determining a frequency characteristic of the compressor system based on the plurality of vibration values, and identifying prohibited compressor frequencies based on the frequency characteristic.

Document BRPI0702369A2, entitled: "SYSTEM AND METHOD OF DIAGNOSIS THROUGH DETECTION OF MECHNICAL WAVES IN REFRIGERATION SYSTEMS AND/OR HOUSEHOLD APPLIANCES", published on January 20, 2009, discloses a system and a method of diagnosis for a refrigeration system and/or household appliance which, based on a multiplicity of physical magnitudes detected, determine and inform the operating condition of said refrigeration system and/or of its components.

Document EP3535533B1, entitled: "REFRIGRRATION DEVICE WITH A NOISE SENSOR", published on September 9, 2019, discloses a refrigeration device with an electrical device part which emits noise during operation. A controller operates the electrical device part in a normal operating power range. A noise sensor detects an intensity of the emitted noise from the electrical device part. The controller is configured to change an operating power of the electrical device part within the normal operating power range and to determine a minimum value of the noise intensity which is detected by the noise sensor and to determine a noise-reduced operating power in order to operate the electrical device part at the noise-reduced operating power.

Therefore, a drawback of the prior art is the fact that by defining forbidden speed ranges for the compressor operation, such prohibitive ranges are permanent and do not change in accordance with the refrigeration system conditions.

### Summary

An objective of the present invention consists of providing a method and system for controlling the vibration of a variable capacity compressor of a refrigeration system that avoids the drawback of the prior art.

Such objective is achieved by a method for controlling the vibration of a variable capacity compressor of a refrigeration system, comprising the following steps:
receiving a request to change the speed of the variable capacity compressor from the current speed to a reference speed;
verifying if the reference speed requires the minimization of the compressor vibration;
defining a range of reference speeds with the reference speed inside said range;
defining, based on the range of speeds and the reference speed, the highest speed within the range of speeds and the lowest speed within the range of speeds;
comparing the reference speed with the current speed;
changing, based on the comparison between the reference speed and the current speed, the speed of the compressor;
measuring the compressor vibration within the range of reference speeds;
defining, based on the vibrations measured within the range of speeds, a lowest vibration, a lowest vibration speed and a highest vibration;
defining, based on the lowest vibration and the highest vibration, a vibration difference;
establishing a vibration difference reference;
comparing the vibration difference with the vibration difference reference; and
defining, based on the comparison between vibration difference and vibration difference reference, a final operating speed for the compressor to operate.

In addition, the method according to the present invention discloses that the reference speed is the new speed at which the compressor is requested to operate from the current speed.

Further, the method according to the present invention consists of the step of verifying if the reference speed requires the minimization of the compressor vibration further comprises:
if the minimization of the compressor vibration is not necessary, the current speed is set as the reference speed.

Additionally, the method according to the present invention discloses that the step of defining the range of speeds further comprises:
the range of speeds is the same for all reference speeds; or
the range of speeds changes for each reference speed.

In addition, the method according to the present invention consists of the step of defining the lowest speed and the highest speed further comprises:
the lowest speed is calculated as RPM_L = RPM_REF - kL. RPM_RG;
the highest speed is RPM_H **=** RPM_REF **+** kH.RPM_RG; and
the highest speed RPM_H and the lowest speed RPM_L are defined symmetrically, the multiplier kL equals kH, or non-symmetrically, the multiplier kL differs from kH, around or equal the reference speed.

Further, the method according to the present invention consists of the steps of comparing the reference speed with the current speed and changing the speed of the compressor further comprise: when the reference speed is lower than the current speed, the speed of the compressor is reduced at a first change rate until the highest reference speed, within the range of speeds, is reached.

Additionally, the method according to the present invention consists of the step of measuring the compressor vibration is carried out as follows:
the speed of the compressor is reduced at a second change rate gradually in steps of speed, from the highest speed to the lowest speed; and
wherein the vibration is measured at each step of speed.

In addition, the method according to the present invention discloses that the steps of comparing the reference speed with the current speed and changing the reference speed further comprise: when the reference speed is higher than the current speed, the speed of the compressor is increased at a first change rate until the lowest speed, within the range of speeds, is reached.

Further, the method according to the present invention discloses that the step of measuring the compressor vibration is carried out as follows:
the speed of the compressor is increased at a second change rate gradually in steps of speed, from the lowest speed to the highest speed; and
wherein vibration is measured at each step of speed.

Additionally, the method according to the present invention consists of the step of defining the lowest vibration, the lowest vibration speed and the highest vibration further comprises:
the lowest vibration is the lowest vibration level, measured by a at least one vibration sensor, within the range of speeds;
the lowest vibration speed is the speed that, when operated by the compressor, makes possible to achieve the lowest vibration within the range of speeds; and
the highest vibration is the highest vibration level, measured by the at least one vibration sensor, within the range of speeds.

In addition, the method according to the present invention consists of the step of defining a vibration difference further comprises: the vibration difference is achieved by **VD = VH - VL;** or
the vibration difference is a percentage of the highest vibration over lowest vibration.

Further, the method according to the present invention discloses that the step of establishing a vibration difference reference further comprises:
the vibration difference reference is the same for all reference speeds; or
the vibration difference reference changes for each reference speed.

Additionally, the method according to the present invention discloses that the steps of comparing the vibration difference with a vibration difference reference and defining the final operating speed for the compressor to operate further comprise: when the vibration difference is greater than the vibration difference reference the final operating speed is set as the lowest vibration speed.

In addition, the method according to the present invention discloses that the steps of comparing the vibration difference with a vibration difference reference and defining the final operating speed for the compressor to operate further comprise: when the vibration difference is less than the vibration difference reference the final operating speed is set as the reference speed.

Such objective is also achieved by a System for controlling the vibration of a variable capacity compressor of a refrigeration system, comprising:
a first electronic controller;
a second electronic controller; and
and at least one vibration sensor.

One of the advantages of the present invention consists of defining the speed of the compressor based on comparisons of vibration levels within a speed range, and not being dependent on the absolute values of vibration levels.

A further advantage of the present invention is the fact that it does small changes on the compressor speed of operation to minimize the vibration without compromise other characteristics of the refrigeration system that are dependent on the compressor speed, like cooling capacity and energy efficiency.

### Brief Description of the Drawings

The objectives and advantages of the present invention will become clearer through the following detailed description of the examples and non-limiting drawings presented at the end of this document:
Figure 1 discloses the refrigeration system and the control system according to the present invention.
Figure 2 discloses the method according to the present invention.
Figures 3 and 4 disclose a practical use of the method and system according to the present invention.
Figure 5 disclose a possibility of use of the method where the method is executed based on a time interval while running at the same current speed for longer times according to the present invention.

### Detailed Description

The present invention discloses a system and method for vibration control of a variable capacity compressor of a refrigeration system to refrigerate an environment 5.

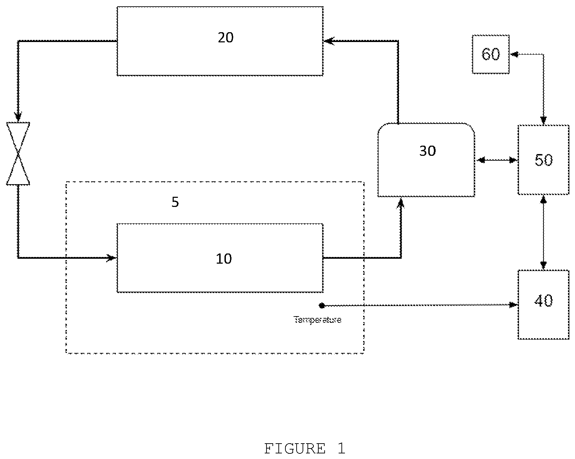

According to Figure 1, the refrigeration system comprises an evaporator 10, a condenser 20, and a variable capacity compressor 30. Additionally, there is a system for vibration control of the variable capacity compressor 30 according to the present invention inside the refrigeration system, said control system comprising a first electronic controller 40, such as an electronic thermostat, that measures the temperature of the environment to be refrigerated, a second electronic controller 50, such as a frequency inverter, that measures and defines the speed of the compressor 30, and at least one vibration sensor 60, such as an accelerometer. The at least one vibration sensor 60 is connected to the second electronic controller 50 and the measured vibration or noise are delivered to such second controller 50.

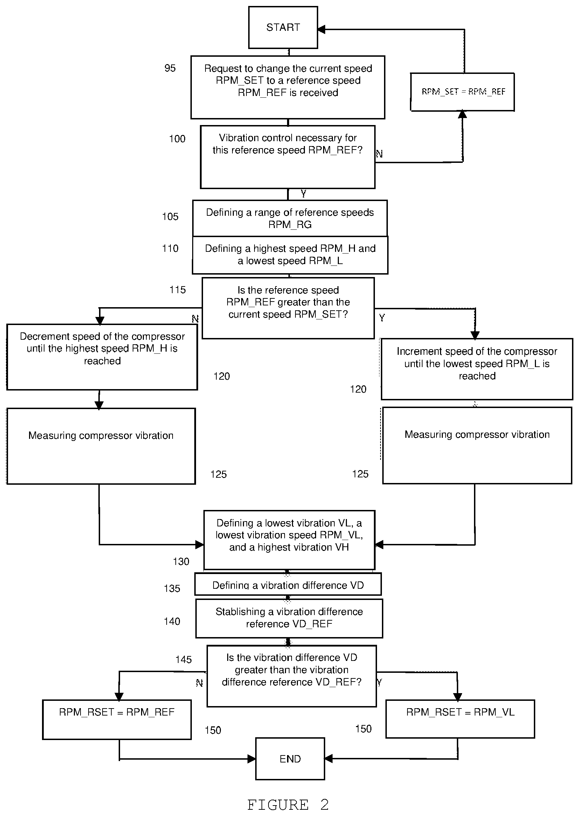

According to Figure 2, the beginning of the method according to the present invention comprises a step of the second controller 50 receiving 95 a request to change the compressor speed from the current speed RPM_SET to a reference speed RPM_REF.

In case it is expected to minimize the vibration of the compressor to the reference speed RPM_REF, the method proceeds to the next step, otherwise, the current speed RPM_SET is set, by the second controller 50, as the reference speed RPM_REF.

When it is expected to minimize the compressor vibration for the reference speed RPM_REF, the method proceeds to a step of defining 105, by the second controller 50, a range of speeds RPM_RG with the reference speed RPM_REF inside said range RPM_RG.

The range of speeds RPM_RG may be a fixed value for any reference speed RPM_REF or can change according to the value of the reference speed RPM_REF. For example, the range of speeds RPM_RG may be limited to smaller values, such as 200 RPM, when the reference speed RPM_REF is a lower speed such as 2000 RPM, minimizing the variation of compressor cooling capacity when efficiency is prioritized. On the other hand, when the reference speed RPM_REF is a higher speed value, such as 4500 RPM, the range of speeds RPM_RG can be increased as well.

Subsequently, further according to Figure 2, the method proceeds to a step that defines 110 by the second controller 50, based on the range of speeds RPM_RG and the reference speed RPM_REF, the highest speed RPM_H within the range of speeds RPM_RG and the lowest speed RPM_L within the range of speeds RPM_RG.

According to this definition 110, the lowest speed RPM_L is calculated as: $RPM_L = RPM_REF - kL . RPM_RG$
wherein, RPM_REF is the reference speed; kL is a multiplier; and RPM_RG is the range of speeds.

Additionally, the highest speed RPM_H is calculated as: $RPM_H = RPM_REF - kH . RPM_RG$
wherein, RPM_REF is the reference speed; kH is a multiplier; and RPM_RG is the range of reference speeds.

The highest speed RPM_H and the lowest speed RPM_L are defined symmetrically or non-symmetrically around or equal to the reference speed RPM_REF. For example, if the reference speed RPM_REF is 2400 RPM and the range of speeds RPM_RG is 200 RPM, the lowest speed RPM_L may be 2300 RPM and the highest speed RPM_H may be 2500 RPM, being the multipliers kL and kH of equal value of 0.5, or the lowest speed RPM_L may be 2350 RPM and the highest speed RPM_H may be 2550 RPM, being the multiplier kL equal to 0.25 and multiplier kH equal to 0.75, or the lowest speed RPM_L may be 2400 RPM and the highest speed RPM_H may be 2600 RPM, being the multiplier kL zero and the multiplier kH equal to 1.

Afterwards, in accordance with Figure 2, the method proceeds to a step that compares 115, by the second controller 50, the reference speed RPM_REF with the current speed RPM_SET.

Based on the comparison 115 between the reference speed RPM_REF and the current speed RPM_SET, the second controller 50 decides how the speed of the compressor 30 should be controlled, that is, decreased or increased.

Therefore, still according to Figure 2, the method proceeds to a step that changes 120 by the second controller 50, based on the comparison 115 between the reference speed RPM_REF and the current speed RPM_SET, the speed of the compressor 30 as follows: if the reference speed RPM_REF is lower than the current speed RPM_SET, the speed of the compressor 30 is reduced until the highest speed RPM_H, within the range of speeds RPM_RG, is reached. In opposition, if the reference speed RPM_REF is higher than the current speed RPM_SET, the speed of the compressor 30 is increased until the lowest speed RPM_L, within the range of speeds RPM_RG, is reached.

Subsequently, further according to Figure 2, the method proceeds to a step that measures 125, by at least one vibration sensor 60, the compressor vibrations within the range of speeds RPM_RG as follows: if the reference speed RPM_REF is lower than the current speed RPM_SET the speed of the compressor 30 is reduced to the highest reference speed RPM_H with a first change rate RPM_ROUT, wherein this first change rate RPM_ROUT (RPM change per second) is usually high to change the speed faster. The first change rate RPM_ROUT is a predefined value set by the user, which depends on the application of the method. The user defines the first change rate RPM_ROUT depending on the speed the method has to be executed. Once the highest reference speed RPM_H is achieved, the speed of the compressor 30 is gradually reduced from the highest speed RPM_H to the lowest speed RPM_L with a second change rate RPM_RIN, where this rate is usually low to guarantee that the vibration sensor 60 can measure the vibration from RPM_H to RPM_L for every step of speed RPM_S. The second change rate RPM_RIN is a predefined value set by the user, which depends on the application of the method. The user defines the second change rate RPM_RIN depending on the speed the method has to be executed. In opposition, if the reference speed RPM_REF is higher than the current speed RPM_SET the speed of the compressor 30 is increased to the lowest speed RPM_L with a first change rate RPM_ROUT. Once the lowest speed RPM_L is achieved, the speed of the compressor 30 is gradually increased from the lowest speed RPM_L to the highest speed RPM_H with a second change rate RPM_RIN, wherein the at least one vibration sensor 60 measures the vibration for every step of speed RPM_S. The step of speed RPM_S is a predefined value set by the user, the user defines the step of speed RPM_S depending on the speed the method has to be executed.

Subsequently, still according to Figure 2, the method proceeds to a step that defines 130 by the second controller 50, based on the vibrations measured 125 within the range of speeds RPM_RG, a lowest vibration VL, a lowest vibration speed RPM_VL and a highest vibration VH. The lowest vibration VL is the lowest vibration level measured by the at least one vibration sensor 60 within the range of speeds RPM_RG, the lowest vibration speed RPM_VL is the speed that, when operated by the compressor 30, makes possible to achieve the lowest vibration VL within the range of speeds RPM_RG, and the highest vibration VH is the highest vibration level measured by the at least one vibration sensor 60 within the range of speeds RPM_RG.

After the definition 130, according to Figure 2, the method proceeds to a step that defines 135 by the second controller 50, based on the lowest vibration VL and the highest vibration VH, a vibration difference VD. The vibration difference VD is calculated as follows: $VD = VH - VL$
wherein VH is the highest vibration within the range of speeds RPM_RG; and VL is the lowest vibration within the range of speeds RPM_RG.

Alternatively, the vibration difference VD can be expressed as a percentage of highest vibration VH over lowest vibration VL as follows: $VD = \frac{VH - VL}{VL} \left(%\right)$

Subsequently, the method proceeds to a step that establishes 140, by the second controller 50, a vibration difference reference VD_REF.

The vibration difference reference VD_REF is a fixed value for all reference speeds RPM_REF, for example, 20%, meaning that the highest vibration VH is 20% higher than the lowest vibration VL. Optionally, the vibration difference reference VD_REF changes for different reference speeds RPM_REF, for example, the vibration difference reference VD_REF is 20% if the reference speed RPM_REF is less than 2000 RPM or 10% if the reference speed RPM_REF is greater than 2000 RPM.

Later, according to Figure 2, the method compares 145, by the second controller 50, the vibration difference VD and the vibration difference reference VD_REF.

Lastly, still according to Figure 2, the method defines 150 by the second controller 50, based on the comparison between vibration difference VD and vibration difference reference VD_REF, a final operating speed RPM_RSET for the compressor 30 to operate.

In this sense, the definition 150 made by the second controller 50 is as follows: if the vibration difference VD is greater than the vibration difference reference VD_REF, the second controller 50 sets the final operating speed RPM_RSET to be equal to the lowest vibration speed RPM_VL. In opposition, if the vibration difference VD is less than the vibration difference reference VD_REF, the second controller 50 sets the value of the final operating speed RPM_RSET to be equal to the requested reference speed RPM_REF.

### [PRATICAL EXAMPLE OF THE USE OF THE PREFERED EMBODIMENT OF THE PRESENT INVENTION]

A practical use of the present invention is detailed below.

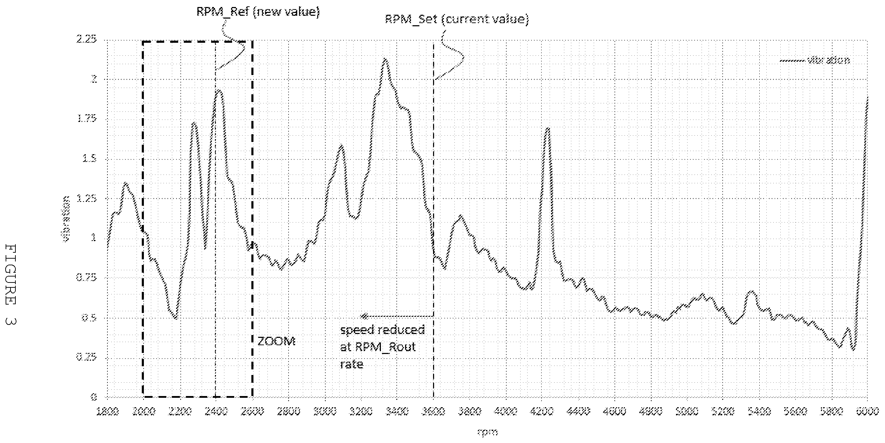

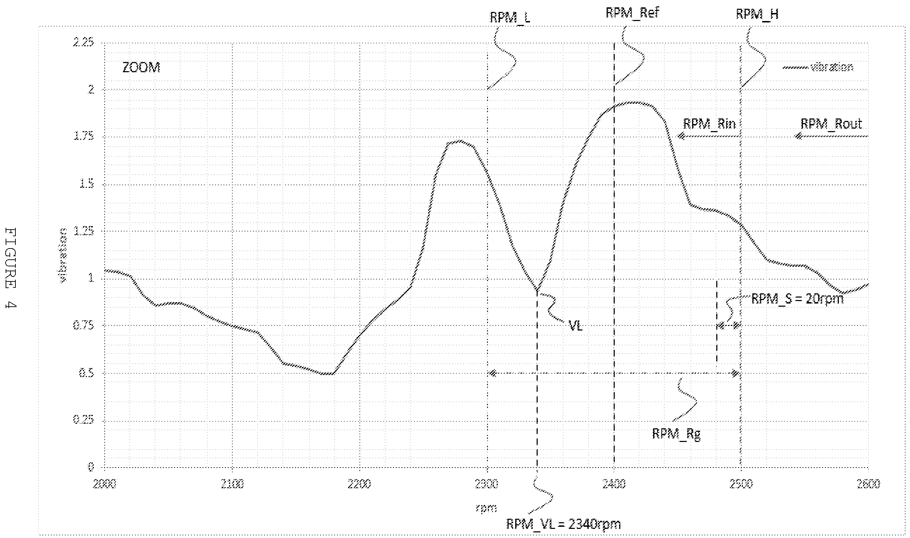

According to Figures 3 and 4, the second controller 50 receives a request to change the variable capacity compressor speed from the current speed RPM_SET 3600RPM to a lower reference speed RPM_REF 2400RPM.

Subsequently, according to Figures 2 and 3, if the vibration of the compressor 30 is expected to be minimized near the reference speed RPM_REF, the controller defines 105 a range of speeds RPM_RG of 200 RPM between 2300 RPM and 2500 RPM (multipliers kL and kH are equal to 0.5), with the reference speed RPM_REF inside said range RPM_RG.

Subsequently, according to Figure 3, the method defines 110 by the second controller 50, the highest reference speed RPM_H of 2500 RPM within the range of speeds RPM_RG and the lowest reference speed RPM_L of 2300 RPM within the range of speeds RPM_RG.

Afterwards, according to Figure 4, the method compares 115, by the second controller 50, the reference speed RPM_REF with the current speed RPM_SET. As the reference speed RPM_REF of 2400 RPM is lower than the current speed of 3600 RPM, the method changes 120 the speed of the compressor 30 by decreasing it until the highest reference speed RPM_H of 2500 RPM is reached.

Later, according to Figure 4, the at least one vibration sensor 60 measures 125 the compressor vibration within the range of speeds RPM_RG. As the reference speed RPM_REF of 2400 RPM is lower than the current speed RPM_REF of 3600 RPM, the speed of the compressor 30 is gradually reduced from 2500 RPM in steps of speed RPM_S of 20 RPM until the lowest reference speed RPM_L of 2300 RPM is reached. The vibration of the compressor 30 is measured by the at least one vibration sensor 60 in each step RPM_S.

Subsequently, based on the vibrations measured 125, the method defines 130 a lowest vibration VL of 0.95 mm/s, a lowest vibration speed RPM_VL of 2340 RPM and a highest vibration of 1.90 mm/s.

Based on the definition 130 of the lowest vibration VL and the highest vibration VH, the method defines 135 a vibration difference VD of 0.95 mm/s. Alternatively, the vibration difference VD can be expressed as the percentage of the highest vibration VH over lowest vibration VL, being VD 100% in this example.

The method establishes 140, by the second controller 50, a vibration difference reference VD_REF, wherein the vibration difference reference VD_REF can be a fixed value for any speed or have different values for different speed ranges, being the vibration difference reference VD_REF, in this example, expressed as a percentage of the highest vibration VH over lowest vibration VL.

The method compares 145, by the second controller 50, the vibration difference VD with the vibration difference reference VD_REF.

In case the vibration difference VD is higher than vibration difference reference VD_REF, for example the vibration difference reference VD_REF is defined as 50%, the method defines 150 by the second controller 50, based on the comparison between vibration difference VD and vibration difference reference VD_REF, a final operating speed RPM_RSET for the compressor 30 to operate, wherein the final operating speed RPM_RSET is the lowest vibration speed RPM_VL.

The comparison between the vibration difference VD and the vibration difference reference VD_REF is executed to weight how much the vibration level changes within the range of speeds RPM_RG. Alternatively, to the example here given, the vibration difference VD can be lower than the vibration difference reference VD_REF, 20% versus 40% respectively as an example. In such case, the second controller 50 would define the final operating speed RPM_RSET at the same reference speed RPM_REF requested in the beginning of the method.

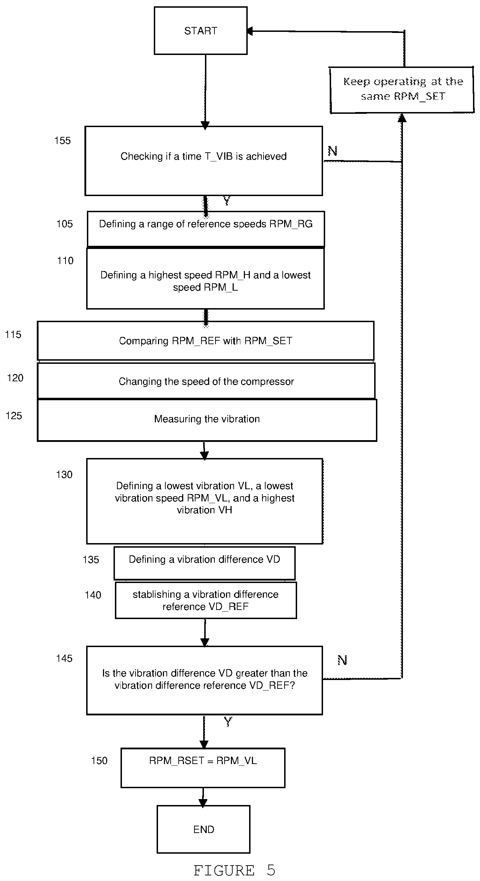

According to Figure 5, the method can be executed not only when there is a request for a reference speed RPM_REF, but it can also be executed from time to time to guarantee that the compressor vibration is reduced even after a longer time operating at the same current speed RPM_SET.

Figure 5 describes a time T_VIB that is periodically checked 155 by the second controller 50. Once the time T_VIB is achieved, the method is executed as previously described, and the compressor speed is adjusted to the lowest vibration speed RPM_VL in case the comparison between vibration difference VD and vibration difference reference VD_REF shows that vibration difference VD is higher than vibration difference reference VD REF.

In addition to the embodiments presented above, the same inventive concept can be applied to other alternatives or possibilities of using the invention, for example, a noise sensor may be used instead of a vibration sensor.

Although the present invention has been described in relation to a preferred embodiment, it should be understood that it is not intended to limit the invention to those particular embodiments. The scope of protection of the present invention is defined by the respective subject-matter of the appended claims.

## Claims

1. Method for controlling the vibration of a variable capacity compressor (30) of a refrigeration system, comprising the following steps:
receiving (95) a request to change the speed of the variable capacity compressor (30) from the current speed (RPM_SET) to a reference speed (RPM_REF);
verifying (100) if the reference speed (RPM_REF) requires the minimization of the compressor vibration;
defining (105) a range of reference speeds (RPM_RG) with the reference speed (RPM_REF) inside said range (RPM_RG);
defining (110), based on the range of speeds (RPM_RG) and the reference speed (RPM_REF), the highest speed (RPM_H) within the range of speeds (RPM_RG) and the lowest speed (RPM_L) within the range of speeds (RPM_RG);
comparing (115) the reference speed (RPM_REF) with the current speed (RPM_SET);
changing (120), based on the comparison between the reference speed (RPM_REF) and the current speed (RPM_SET), the speed of the compressor (30);
measuring (125) the compressor vibration within the range of reference speeds (RPM_RG);
**characterized in that** further comprises the following steps:
defining (130), based on the vibrations measured within the range of speeds (RPM_RG), a lowest vibration (VL), a lowest vibration speed (RPM_VL) and a highest vibration (VH);
defining (135), based on the lowest vibration (VL) and the highest vibration (VH), a vibration difference (VD);
establishing (140) a vibration difference reference (VD_REF);
comparing (145) the vibration difference (VD) with the vibration difference reference (VD_REF); and
defining (150), based on the comparison between vibration difference (VD) and vibration difference reference (VD_REF), a final operating speed (RPM_RSET) for the compressor (30) to operate.

2. Method, according to claim 1, **characterized in that** the reference speed (RPM_REF) is the new speed at which the compressor (30) is requested to operate from the current speed (RPM_SET).

3. Method, according to claim 1, **characterized in that** the step of verifying (100) if the reference speed (RPM_REF) requires the minimization of the compressor vibration further comprises:
if the minimization of the compressor vibration is not necessary, the current speed (RPM_SET) is set as the reference speed (RPM_REF).

4. Method, according to claim 1, **characterized in that** the step of defining (105) the range of speeds (RPM_RG) further comprises:
the range of speeds (RPM_RG) is the same for all reference speeds (RPM_REF); or
the range of speeds (RPM_RG) changes for each reference speed (RPM_REF).

5. Method, according to claim 1, **characterized in that** the step of defining (110) the lowest speed (RPM_L) and the highest speed (RPM_H) further comprises:
the lowest speed (RPM_L) is calculated as RPM_L **=** RP **M_REF - kL.RPM_RG;**
the highest speed (RPM_H) is **RPM_H = RPM_REF + kH.RPM_ RG;** and
the highest speed RPM_H and the lowest speed RPM_L are defined symmetrically, the multiplier kL equals kH, or non-symmetrically, the multiplier kL differs from kH, around or equal the reference speed (RPM_REF).

6. Method, according to claim 1, **characterized in that** the steps of comparing (115) the reference speed (RPM_REF) with the current speed (RPM_SET) and changing (120) the speed of the compressor (30) further comprise: when the reference speed (RPM_REF) is lower than the current speed (RPM_SET), the speed of the compressor (30)is reduced at a first change rate (RPM_ROUT) until the highest reference speed (RPM_H), within the range of speeds (RPM_RG), is reached.

7. Method, according to claim 1, **characterized in that** the step of measuring the compressor vibration (125) is carried out as follows:
the speed of the compressor (30) is reduced at a second change rate (RPM_RIN) gradually in steps of speed (RPM_S), from the highest speed (RPM_H) to the lowest speed (RPM_L); and
wherein the vibration is measured at each step of speed (RPM_S).

8. Method according to claim 1, **characterized in that** the steps of comparing (115) the reference speed (RPM_REF) with the current speed (RPM_SET) and changing (120) the reference speed (RPM_REF) further comprise: when the reference speed (RPM_REF) is higher than the current speed (RPM_SET), the speed of the compressor(30) is increased at a first change rate (RPM_ROUT) until the lowest speed (RPM_L), within the range of speeds (RPM_RG), is reached.

9. Method, according to claim 1, **characterized in that** the step of measuring (125) the compressor vibration is carried out as follows:
the speed of the compressor (30) is increased at a second change rate (RPM_RIN) gradually in steps of speed (RPM_S), from the lowest speed (RPM_L) to the highest speed (RPM_H); and
wherein vibration is measured at each step of speed (RPM_S).

10. Method, according to claim 1, **characterized in that** the step of defining (130) the lowest vibration (VL), the lowest vibration speed (RPM_VL) and the highest vibration (VH) further comprises:
the lowest vibration (VL) is the lowest vibration level, measured by a at least one vibration sensor (60), within the range of speeds (RPM_RG);
the lowest vibration speed (RPM_VL) is the speed that, when operated by the compressor (30), makes possible to achieve the lowest vibration (VL) within the range of speeds (RPM_RG); and
the highest vibration (VH) is the highest vibration level, measured by the at least one vibration sensor (60), within the range of speeds (RPM_RG).

11. Method, according to claim 1, **characterized in that** the step of defining (135) a vibration difference (VD) further comprises: the vibration difference (VD) is achieved by **VD = VH - VL;** or
the vibration difference (VD) is a percentage of the highest vibration (VH) over lowest vibration (VL), calculated as $VD = \frac{VH - VL}{VL} \left(%\right)$.

12. Method, according to claim 1, **characterized in that** the step of establishing (140) a vibration difference reference (VD_REF) further comprises:
the vibration difference reference (VD_REF) is the same for all reference speeds (RPM_REF); or
the vibration difference reference (VD_REF) changes for each reference speed (RPM_REF).

13. Method, according to claim 1, **characterized in that** the steps of comparing (145) the vibration difference (VD) with a vibration difference reference (VD_REF) and defining (150) the final operating speed (RPM_RSET) for the compressor (30) to operate further comprise: when the vibration difference (VD) is greater than the vibration difference reference (VD_REF) the final operating speed (RPM_RSET) is set as the lowest vibration speed (RPM_VL).

14. Method, according to claim 1, **characterized in that** the steps of comparing (145) the vibration difference (VD) with a vibration difference reference (VD_REF) and defining (150) the final operating speed (RPM_RSET) for the compressor (30) to operate further comprise: when the vibration difference (VD) is less than the vibration difference reference (VD_REF) the final operating speed (RPM_RSET) is set as the reference speed (RPM_REF).

15. System for controlling the vibration of a variable capacity compressor of a refrigeration system, comprising:
a first electronic controller (40);
a second electronic controller (50); and
and at least one vibration sensor (60), **characterized in that** it executes the method as defined in claim 1.

## Patentansprüche

1. Verfahren zur Steuerung der Schwingung eines Verdichters (30) mit veränderlicher Kapazität eines Kühlsystems, das folgende Schritte umfasst:
das Empfangen (95) einer Anfrage zur Änderung der Geschwindigkeit des Verdichters (30) mit veränderlicher Kapazität von der aktuellen Geschwindigkeit (RPM_SET) in eine Referenzgeschwindigkeit (RPM_REF);
das Überprüfen (100), ob die Referenzgeschwindigkeit (RPM_REF) die Minimierung der Verdichterschwingungen erfordert;
das Definieren (105) einer Bandbreite von Referenzschwingungen (RPM_RG), wobei die Referenzgeschwindigkeit (RPM_REF) innerhalb der Bandbreite (RPM_RG) liegt;
das Definieren (110), anhand der Bandbreite von Geschwindigkeiten (RPM_RG) und der Referenzgeschwindigkeit (RPM_REF), der höchsten Geschwindigkeit (RPM_H) innerhalb der Bandbreite von Geschwindigkeiten (RPM_RG) und der niedrigsten Geschwindigkeit (RPM_L) innerhalb der Bandbreite von Geschwindigkeiten (RPM_RG);
das Vergleichen (115) der Referenzgeschwindigkeit (RPM_REF) mit der aktuellen Geschwindigkeit (RPM_SET);
das Ändern (120), anhand des Vergleichs zwischen der Referenzgeschwindigkeit (RPM_REF) und der aktuellen Geschwindigkeit (RPM_SET), der Geschwindigkeit des Verdichters (30);
das Messen (125) der Verdichterschwingungen innerhalb der Bandbreite von Referenzgeschwindigkeiten (RPM_RG);
**dadurch gekennzeichnet, dass** es weiter folgende Schritte umfasst:
das Bestimmen (130), anhand der Schwingungen, die innerhalb der Bandbreite von Geschwindigkeiten (RPM_RG) gemessen werden, einer niedrigsten Schwingung (VL), einer niedrigsten Schwingungsgeschwindigkeit (RPM_VL) und einer höchsten Schwingung (VH);
das Bestimmen (135), anhand der niedrigsten Schwingung (VL) und der höchsten Schwingung (VH), einer Schwingungsdifferenz (VD);
das Festlegen (140) einer Schwingungsdifferenzreferenz (VD_REF);
das Vergleichen (145) der Schwingungsdifferenz (VD) mit der Schwingungsdifferenzreferenz (VD_REF) und
das Bestimmen (150), anhand des Vergleichs zwischen Schwingungsdifferenz (VD) und Schwingungsdifferenzreferenz (VD_REF), einer End-Arbeitsgeschwindigkeit (RPM_RSET) für die Arbeit des Verdichters (30).

2. Verfahren gemäß Anspruch 1, **dadurch gekennzeichnet, dass** die Referenzgeschwindigkeit (RPM_REF) die neue Geschwindigkeit ist, mit welcher der Verdichter (30) von der aktuellen Geschwindigkeit (RPM_SET) aus arbeiten soll.

3. Verfahren gemäß Anspruch 1, **dadurch gekennzeichnet, dass** der Schritt des Überprüfens (100), ob die Referenzgeschwindigkeit (RPM_REF) die Minimierung der Verdichterschwingungen erfordert, weiter Folgendes umfasst:
wenn die Minimierung der Verdichterschwingungen nicht notwendig ist, wird die aktuelle Geschwindigkeit (RPM_SET) als Referenzgeschwindigkeit (RPM_REF) festgelegt.

4. Verfahren gemäß Anspruch 1, **dadurch gekennzeichnet, dass** der Schritt des Definierens (105) der Bandbreite von Geschwindigkeiten (RPM_RG) weiter Folgendes umfasst:
die Bandbreite von Geschwindigkeiten (RPM_RG) ist bei allen Referenzgeschwindigkeiten (RPM_REF) gleich, oder
die Bandbreite von Geschwindigkeiten (RPM_RG) ändert sich bei jeder Referenzgeschwindigkeit (RPM_REF).

5. Verfahren gemäß Anspruch 1, **dadurch gekennzeichnet, dass** der Schritt des Definierens (110) der niedrigsten Geschwindigkeit (RPM_L) und der höchsten Geschwindigkeit (RPM_H) weiter Folgendes umfasst:
die niedrigste Geschwindigkeit (RPM_L) wird berechnet als **RPM_l = RPM_REF - kL.RPM_RG;**
die höchste Geschwindigkeit (RPM_H) ist **RPM_H = RPM_REF + kH.RPM_RG;** und
die höchste Geschwindigkeit RPM_H und die niedrigste Geschwindigkeit RPM_L sind symmetrisch definiert; der Multiplikator kL ist gleich kH; oder nicht symmetrisch; der Multiplikator kL unterscheidet sich von kH, um die oder gleich der Referenzgeschwindigkeit (RPM_REF).

6. Verfahren gemäß Anspruch 1, **dadurch gekennzeichnet, dass** die Schritte des Vergleichens (115) der Referenzgeschwindigkeit (RPM_REF) mit der aktuellen Geschwindigkeit (RPM_SET) und des Änderns (120) der Geschwindigkeit des Verdichters (30) weiter Folgendes umfassen: wenn die Referenzgeschwindigkeit (RPM_REF) niedriger ist als die aktuelle Geschwindigkeit (RPM_SET), wird die Geschwindigkeit des Verdichters (30) mit einer ersten Änderungsrate (RPM_ROUT) reduziert, bis die höchste Referenzgeschwindigkeit (RPM_H) innerhalb der Bandbreite von Geschwindigkeiten (RPM_RG) erreicht ist.

7. Verfahren gemäß Anspruch 1, **dadurch gekennzeichnet, dass** der Schritt des Messens der Verdichterschwingung (125) wie folgt durchgeführt wird:
die Geschwindigkeit des Verdichters (30) wird mit einer zweiten Änderungsrate (RPM_RIN) allmählich in Geschwindigkeitsschritten (RPM_S) von der höchsten Geschwindigkeit (RPM_H) zur niedrigsten Geschwindigkeit (RPM_L) reduziert,
wobei die Schwingung in jedem Geschwindigkeitsschritt (RPM_S) gemessen wird.

8. Verfahren gemäß Anspruch 1, **dadurch gekennzeichnet, dass** die Schritte des Vergleichens (115) der Referenzgeschwindigkeit (RPM_REF) mit der aktuellen Geschwindigkeit (RPM_SET) und des Änderns (120) der Referenzgeschwindigkeit (RPM_REF) weiter Folgendes umfassen: wenn die Referenzgeschwindigkeit (RPM_REF) höher ist als die aktuelle Geschwindigkeit (RPM_SET), wird die Geschwindigkeit des Verdichters (30) mit einer ersten Änderungsrate (RPM_ROUT) erhöht, bis die niedrigste Geschwindigkeit (RPM_L) innerhalb der Bandbreite von Geschwindigkeiten (RPM_RG) erreicht ist.

9. Verfahren gemäß Anspruch 1, **dadurch gekennzeichnet, dass** der Schritt des Messens (125) der Verdichterschwingung wie folgt durchgeführt wird:
die Geschwindigkeit des Verdichters (30) wird mit einer zweiten Änderungsrate (RPM_RIN) allmählich in Geschwindigkeitsschritten (RPM_S) von der niedrigsten Geschwindigkeit (RPM_L) bis zur höchsten Geschwindigkeit (RPM_H) erhöht; und
wobei die Schwingung mit jedem Geschwindigkeitsschritt (RPM_S) gemessen wird.

10. Verfahren gemäß Anspruch 1, **dadurch gekennzeichnet, dass** der Schritt des Bestimmens (130) der niedrigsten Schwingung (VL), der niedrigsten Schwingungsgeschwindigkeit (RPM_VL) und der höchsten Schwingung (VH) weiter Folgendes umfasst:
die niedrigste Schwingung (VL) ist das niedrigste Schwingungsniveau, gemessen von mindestens einem Schwingungssensor (60), innerhalb der Bandbreite von Geschwindigkeiten (RPM_RG);
die niedrigsten Schwingungsgeschwindigkeit (RPM_VL) ist die Geschwindigkeit, die, bei Betrieb durch den Verdichter (30), es ermöglicht, die niedrigste Schwingung (VL) innerhalb der Bandbreite von Geschwindigkeiten (RPM_RG) zu erzielen; und
die höchste Schwingung (VH) ist das höchste Schwingungsniveau, gemessen von dem mindestens einen Schwingungssensor (60), innerhalb der Bandbreite von Geschwindigkeiten (RPM_RG).

11. Verfahren gemäß Anspruch 1, **dadurch gekennzeichnet, dass** der Schritt des Bestimmens (135) einer Schwingungsdifferenz (VD) weiter Folgendes umfasst: die Schwingungsdifferenz (VD) wird bestimmt durch **VD = VH - VL,** oder
die Schwingungsdifferenz (VD) ist ein prozentualer Anteil der höchsten Schwingung (VH) über der niedrigsten Schwingung (VL), berechnet wie folgt: $VD = \frac{VH - VL}{VL} \left(%\right) .$

12. Verfahren gemäß Anspruch 1, **dadurch gekennzeichnet, dass** der Schritt (140) des Festlegens einer Schwingungsdifferenzreferenz (VD_REF) weiter Folgendes umfasst:
die Schwingungsdifferenzreferenz (VD_REF) ist bei allen Referenzgeschwindigkeiten (RPM_REF) gleich; oder
die Schwingungsdifferenzreferenz (VD_REF) ändert sich mit jeder Referenzgeschwindigkeit (RPM_REF).

13. Verfahren gemäß Anspruch 1, **dadurch gekennzeichnet, dass** die Schritte des Vergleichens (145) der Schwingungsdifferenz (VD) mit einer Schwingungsdifferenzreferenz (VD_REF) und des Bestimmens (150) der End-Arbeitsgeschwindigkeit (RPM_RSET) für die Arbeit des Verdichters (30) weiter Folgendes umfassen: wenn die Schwingungsdifferenz (VD) größer ist als die Schwingungsdifferenzreferenz (VD_REF), wird die End-Arbeitsgeschwindigkeit (RPM_RSET) als niedrigste Schwingungsgeschwindigkeit (RPM_VL) festgelegt.

14. Verfahren gemäß Anspruch 1, **dadurch gekennzeichnet, dass** die Schritte des Vergleichens (145) der Schwingungsdifferenz (VD) mit einer Schwingungsdifferenzreferenz (VD_REF) und des Bestimmens (150) der End-Arbeitsgeschwindigkeit (RPM_RSET) für den Verdichter (30) für die Arbeit weiter Folgendes umfassen: wenn die Schwingungsdifferenz (VD) niedriger ist als die Schwingungsdifferenzreferenz (VD_REF), wird die End-Arbeitsgeschwindigkeit (RPM_RSET) als Referenzgeschwindigkeit (RPM_REF) festgelegt.

15. System zur Steuerung der Schwingung eines Verdichters mit veränderlicher Kapazität eines Kühlsystems, Folgendes umfassend:
eine erste elektronische Steuerung (40);
eine zweite elektronische Steuerung (50) und
mindestens einen Schwingungssensor (60); **dadurch gekennzeichnet, dass** es das Verfahren gemäß Anspruch 1 ausführt.

## Revendications

1. Procédé de contrôle des vibrations d'un compresseur à capacité variable (30) d'un système de réfrigération, comprenant les étapes suivantes :
recevoir (95) une demande de modification de la vitesse du compresseur à capacité variable (30) de la vitesse actuelle (RPM_SET) à une vitesse de référence (RPM_REF) ;
vérifier (100) si la vitesse de référence (RPM_REF) nécessite la minimisation des vibrations du compresseur ;
définir (105) une plage de vitesses de référence (RPM_RG) dans laquelle la vitesse de référence (RPM_REF) est comprise ;
définir (110), sur la base de la plage de vitesses (RPM_RG) et de la vitesse de référence (RPM_REF), la vitesse la plus élevée (RPM_H) au sein de la plage de vitesses (RPM_RG) et la vitesse la plus basse (RPM_L) au sein de la plage de vitesses (RPM_RG) ;
comparer (115) la vitesse de référence (RPM_REF) à la vitesse actuelle (RPM_SET) ;
modifier (120), en fonction de la comparaison entre la vitesse de référence (RPM_REF) et la vitesse actuelle (RPM_SET), la vitesse du compresseur (30) ;
mesurer (125) les vibrations du compresseur dans la plage de vitesses de référence (RPM_RG) ;
**caractérisé en ce qu'**il comprend en outre les étapes suivantes :
définir (130), sur la base des vibrations mesurées dans la plage de vitesses (RPM_RG), une vibration la plus basse(VL), une vitesse de vibration la plus basse (RPM_VL) et une vibration la plus élevée(VH) ;
définir (135), sur la base de la vibration la plus basse (VL) et
de la vibration la plus élevée (VH), une différence de vibration (VD) ;
établir (140) une référence de différence de vibration (VD_REF) ;
comparer (145) la différence de vibration (VD) à la référence de différence de vibration (VD_REF) ; et
définir (150), sur la base de la comparaison entre la différence de vibration (VD) et la référence de différence de vibration (VD_REF), une vitesse de fonctionnement finale (RPM_RSET) à laquelle le compresseur (30) doit fonctionner.

2. Procédé selon la revendication 1, **caractérisé en ce que** la vitesse de référence (RPM_REF) est la nouvelle vitesse à laquelle le compresseur (30) est appelé à fonctionner à partir de la vitesse actuelle (RPM_SET).

3. Procédé selon la revendication 1, **caractérisé en ce que** l'étape consistant à vérifier (100) si la vitesse de référence (RPM_REF) nécessite la minimisation des vibrations du compresseur comprend en outre :
si la minimisation des vibrations du compresseur n'est pas nécessaire, la vitesse actuelle (RPM_SET) est définie comme vitesse de référence (RPM_REF).

4. Procédé selon la revendication 1, **caractérisé en ce que** l'étape consistant à définir (105) la plage de vitesses (RPM_RG) comprend en outre :
la plage de vitesses (RPM_RG) est la même pour toutes les vitesses de référence (RPM_REF) ; ou
la plage de vitesses (RPM_RG) varie pour chaque vitesse de référence (RPM_REF).

5. Procédé selon la revendication 1, **caractérisé en ce que** l'étape consistant à définir (110) la vitesse la plus basse (RPM_L) et la vitesse la plus élevée (RPM_H) comprend en outre :
la vitesse la plus basse (RPM_L) est calculée selon la formule RPM_L = RP $M_REF - kL . RPM_RG ;$
la vitesse la plus élevée (RPM_H) est donnée par RPM_H = RPM_REF + kH.RPM_RG ; et
la vitesse la plus élevée RPM_H et la vitesse la plus basse RPM_L sont définies de manière symétrique, le coefficient kL étant égal à kH, ou de manière asymétrique, le coefficient kL étant différent de kH, autour de la vitesse de référence (RPM_REF) ou égale à celle-ci.

6. Procédé selon la revendication 1, **caractérisé en ce que** les étapes consistant à comparer (115) la vitesse de référence (RPM_REF) à la vitesse actuelle (RPM_SET) et à modifier (120) la vitesse du compresseur (30) comprennent en outre : lorsque la vitesse de référence (RPM_REF) est inférieure à la vitesse actuelle (RPM_SET), la vitesse du compresseur (30) est réduite à un premier taux de variation (RPM_ROUT) jusqu'à ce que la vitesse de référence maximale (RPM_H), comprise dans la plage de vitesses (RPM_RG), soit atteinte.

7. Procédé selon la revendication 1, **caractérisé en ce que** l'étape consistant à mesurer les vibrations du compresseur (125) est réalisée comme suit :
la vitesse du compresseur (30) est réduite à un deuxième taux de variation (RPM_RIN) progressivement par paliers de vitesse (RPM_S), de la vitesse la plus élevée (RPM_H) à la vitesse la plus basse (RPM_L) ; et
où les vibrations sont mesurées à chaque palier de vitesse (RPM_S).

8. Procédé selon la revendication 1, **caractérisé en ce que** les étapes consistant à comparer (115) la vitesse de référence (RPM_REF) à la vitesse actuelle (RPM_SET) et à modifier (120) la vitesse de référence (RPM_REF) comprennent en outre : lorsque la vitesse de référence (RPM_REF) est supérieure à la vitesse actuelle (RPM_SET), la vitesse du compresseur (30) est augmentée à un premier taux de variation (RPM_ROUT) jusqu'à ce que la vitesse la plus basse (RPM_L), comprise dans la plage de vitesses (RPM_RG), soit atteinte.

9. Procédé selon la revendication 1, **caractérisé en ce que** l'étape de mesure (125) des vibrations du compresseur est réalisée comme suit :
la vitesse du compresseur (30) est augmentée à un deuxième taux de variation (RPM_RIN), progressivement par paliers de vitesse (RPM_S), depuis la vitesse la plus basse (RPM_L) jusqu'à la vitesse la plus élevée (RPM_H) ; et
où les vibrations sont mesurées à chaque palier de vitesse (RPM_S).

10. Procédé selon la revendication 1, **caractérisé en ce que** l'étape consistant à définir (130) la vibration la plus basse (VL), la vitesse de vibration la plus basse (RPM_VL) et la vibration la plus élevée (VH) comprend en outre :
la vibration la plus basse (VL) est le niveau de vibration le plus bas, mesuré par au moins un capteur de vibration (60), dans la plage de vitesses (RPM_RG) ;
la vitesse de vibration la plus basse (RPM_VL) est la vitesse qui, lorsque le compresseur (30) fonctionne, permet d'atteindre la vibration la plus basse (VL) dans la plage de vitesses (RPM_RG) ; et
la vibration la plus élevée (VH) est le niveau de vibration le plus élevé , mesuré par le au moins un capteur de vibration (60), dans la plage de vitesses (RPM_RG).

11. Procédé selon la revendication 1, **caractérisé en ce que** l'étape consistant à définir (135) une différence de vibration (VD) comprend en outre : la différence de vibration (VD) est obtenue par VD = VH - VL ; ou
la différence de vibration (VD) est un pourcentage de la vibration la plus élevée (VH) par rapport à la vibration minimale (VL), calculé comme $VD = \frac{VH - VL}{VL} \left(%\right)$.

12. Procédé selon la revendication 1, **caractérisé en ce qu'**en ce que l'étape consistant à établir (140) une référence de différence de vibration (VD_REF) comprend en outre :
la référence de différence de vibration (VD_REF) est la même pour toutes les vitesses de référence (RPM_REF) ; ou
la référence de différence de vibration (VD_REF) varie pour chaque vitesse de référence (RPM_REF).

13. Procédé selon la revendication 1, **caractérisé en ce que** les étapes consistant à comparer (145) la différence de vibration (VD) à une référence de différence de vibration (VD_REF) et à définir (150) la vitesse de fonctionnement finale (RPM_RSET) du compresseur (30) comprennent en outre : lorsque la différence de vibration (VD) est supérieure à la référence de différence de vibration (VD_REF), la vitesse de fonctionnement finale (RPM_RSET) est fixée comme la vitesse de vibration la plus basse (RPM_VL).

14. Procédé selon la revendication 1, **caractérisé en ce que** les étapes consistant à comparer (145) la différence de vibration (VD) à une référence de différence de vibration (VD_REF) et à définir (150) la vitesse de fonctionnement finale (RPM_RSET) du compresseur (30) pour le fonctionnement comprennent en outre : lorsque la différence de vibration (VD) est inférieure à la référence de différence de vibration (VD_REF), la vitesse de fonctionnement finale (RPM_RSET) est fixée comme la vitesse de référence (RPM_REF).

15. Système de contrôle des vibrations d'un compresseur à capacité variable d'un système de réfrigération, comprenant :
un premier contrôleur électronique (40) ;
un deuxième contrôleur électronique (50) ; et
au moins un capteur de vibrations (60), **caractérisé en ce qu'**il met en œuvre le procédé tel que défini dans la revendication 1.
